(19) Europäisches Patentamt
European Patent Office
Office européen des brevets

(11) EP 1 535 757 A1

(12) **EUROPEAN PATENT APPLICATION**
published in accordance with Art. 158(3) EPC

(43) Date of publication:
**01.06.2005 Bulletin 2005/22**

(21) Application number: **03721042.4**

(22) Date of filing: **07.05.2003**

(51) Int Cl.7: **B60C 7/00**, B60C 11/00, B60C 11/02

(86) International application number:
**PCT/JP2003/005680**

(87) International publication number:
**WO 2004/018235 (04.03.2004 Gazette 2004/10)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **21.08.2002 JP 2002240507**

(71) Applicant: **Fukunaga Engineering Co., Ltd.**
**Osaka-shi, Osaka 536-0014 (JP)**

(72) Inventor: **FUKUNAGA, Muneyasu**
**Osaka-shi, Osaka 536-0014 (JP)**

(74) Representative: **Sturt, Clifford Mark et al**
**Miller Sturt Kenyon**
**9 John Street**
**London WC1N 2ES (GB)**

(54) **COMPOUND SOLID TIRE**

(57) A compound solid tire capable of preventing a core tire from being displaced from a cover tire and preventing the side part of the cover tire from opening, comprising the core tire formed of an annular elastic body and the annular cover tire having an inner peripheral surface fitted to the outer peripheral surface of the core tire, the cover tire further comprising a tread part and side parts, wherein the inner peripheral length of the cover tire at the inner peripheral surface center position is set to 92 to 99.5% of the outer peripheral length of the core tire at the outer peripheral surface center position.

Fig.1

P
11
13
2
P11
15
C
D
B
A
12
14
14
17
E
17
1

EP 1 535 757 A1

## Description

BACKGROUND OF THE INVENTION

Technical Field

The present invention concerns a compound solid tire with a two-layered structure of a core and a cover tire, and more particularly, a compound solid tire that prevents the core tire from deviating from the cover tire and also prevents the side part of the cover tire from opening.

Related Art

A solid tire, being composed of solid elastic materials, is better than a pneumatic tire in terms of higher load support capabilities and the absence of any air leaking, and is particularly used in heavy transportation vehicles and so on.

Concerning the aforementioned solid tire, the Inventor has proposed composing a solid tire of a core tire and a cover tire (the tread) by fitting them in a non-bonding state, as disclosed in Japanese Patent Publication No. 3245619. Such a compound solid tire has the advantage of enabling to show the flexible elasticity as in a pneumatic tire without damaging load capacity, and to reduce the running cost of a tire by replacing worn cover tires.

However, since the core tire and cover tire are fitted in a non-bonding state as in the aforementioned compound tire, for instance, the core tire can be deviated from the cover tire in the circumferential direction of the tire during braking or driving, thus the braking or driving force can be insufficiently transmitted. Also, the core tire can be deviated from the cover tire in the axial direction of the tire when turned in a non-driving state, and the side part of the cover tire may open. Therefore, these inconveniences have made it difficult to put to practical use the aforementioned compound solid tire.

Disclosure of the Invention

An object of the present invention is to provide a compound solid tire capable of preventing the core tire and the cover tire from deviating and preventing the side part of the cover tire from opening.

To achieve the aforementioned object, a compound solid tire comprises of a core tire made of an annular elastic body and an annular cover tire with an inner peripheral surface to be fitted to the outer peripheral surface of the core tire, the cover tire comprising the tread part and side parts, wherein the inner peripheral length of the cover tire at the center position of the inner peripheral surface is set to 92 to 99.5% of the outer peripheral length of the core tire at the center position of the outer peripheral surface.

Here, it is preferable to set the expanded width of the inner peripheral surface of the cover tire to 95 to 100% of that of the outer peripheral surface of the core tire. Also, it is preferable to set the curvature radius in the tire axial direction of the inner peripheral surface of the cover tire to 60 to 75% of the curvature radius in the tire axial direction of the outer peripheral surface of the core tire.

Thus, it is possible to prevent the core and cover tires from deviating in the tire circumferential direction and in the tire axial direction , through increasing the tightening force of the core tire with the cover tire, by fitting the dimensions and shape of the cover tire to the core tire. Particularly, as tension is generated in the side part of the cover tire, the side part of the cover tire is effectively prevented from opening when turned in a non-driving state, and the cover tire is effectively prevented from coming off the core tire.

In the present invention, it is preferable to dispose a flange on the inner peripheral edge of the side part of the cover tire, thereby more securely preventing any deviation between the core tire and the cover tire, opening of the side part of the cover tire and dislocation of the cover tire.

Supposing the section height of the assembly of the core tire and the cover tire is A, the section height of the cover tire B, the tread thickness at the center position of the inner peripheral surface of the cover tire C, the tread thickness at the shoulder position of the cover tire D and the flange thickness of the cover tire E, it is required that the proportion (%) of these dimensions satisfies the following expressions (1) to (4):

$$35 \leqq B/A \times 100 \leqq 70 \quad (1)$$

$$5 \leqq C/A \times 100 \leqq 30 \quad (2)$$

$$100 \leqq D/C \times 100 \leqq 120 \quad (3)$$

$$30 \leqq E/C \times 100 \leqq 60 \quad (4)$$

When the aforementioned dimensional proportions are satisfied, any deviation between the core tire and the cover tire, opening of the side part of the cover tire and dislocation of the cover tire can be prevented more securely in the compound solid tire with a two-layered structure of the core tire and the cover tire.

In the present invention, it is preferable that JIS A hardness of the rubber compositions which form the cover tire is 60 to 75, and the modulus at 300% elongation is 7 to 14 MPa. Thereby, any deviation between the core tire and the cover tire, opening of the side part of the cover tire and dislocation of the cover tire can be prevented more securely.

Moreover, it is preferable to provide at least one longitudinal groove extending in the circumferential direction and a plurality of transverse grooves extending in the tire axial direction on the outer peripheral surface of the core tire, and on the other hand, to provide a protrusion to engage the longitudinal groove and transverse grooves on the inner peripheral surface of the cover tire. Thereby, any deviation between the core tire and the cover tire, opening of the side part of the cover tire and dislocation of the cover tire can be prevented more securely. In this case, it is preferable to incline the transverse grooves with respect to the tire axial direction and to make a pattern formed by the longitudinal and transverse grooves non-directional. It then becomes possible to simultaneously inhibit deviation in the circumferential and axial directions of the tire due to the inclined transverse grooves and, what is more, the direction of fitting can not be mistaken when the core tire and the cover tire are assembled as the pattern is non-directional.

BRIEF DESCRIPTION OF THE DRAWINGS

Fig. 1 is a tire meridian section showing a compound solid tire composed of an embodiment of the present invention;
Fig. 2 is a tire meridian section showing a core tire composing the compound solid tire in Fig. 1;
Fig. 3 is a tire meridian section showing a cover tire composing the compound solid tire in Fig. 1;
Fig. 4 is an enlarged section of Y part in Fig. 3;
Fig. 5 is an enlarged section showing a variation of Y part in Fig. 3;
Fig. 6 is a developed view showing the outer peripheral surface of a core tire composing the compound solid tire in Fig. 1;
Fig. 7 is a sectional view taken along line Z-Z in Fig. 6; and
Fig. 8 is a tire meridian section showing a compound solid tire composed of an embodiment of the present invention.

BEST MODE FOR CARRYING OUT THE INVENTION

The composition of the present invention shall now be descried in detail referring to the attached drawings.

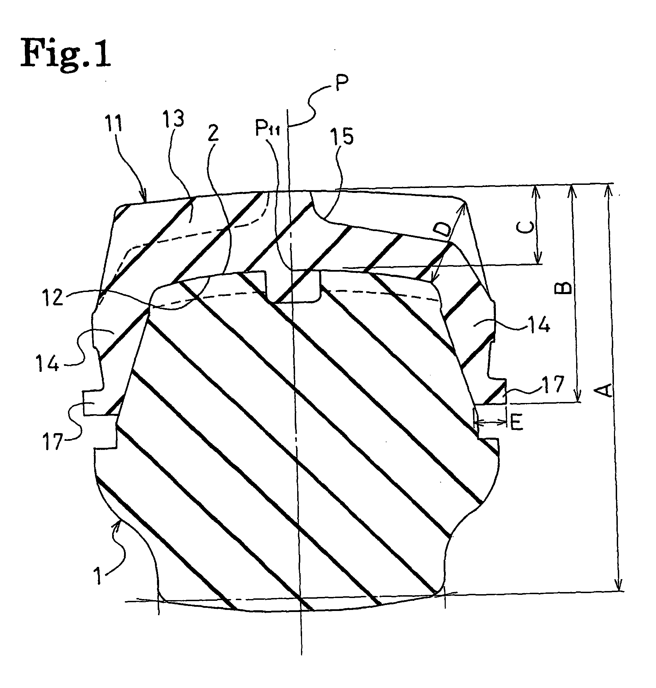

Fig. 1 shows a compound solid tire composed of an embodiment of the present invention. This compound solid tire is composed of annular core tire 1 and annular cover tire 11, as shown in Fig. 1. The cover tire 11 is layered onto the core tire 1 in a non-bonding state, entirely fitting the inner peripheral surface 12 thereof to the outer peripheral surface 2 of core tire 1.

The core tire 1 is composed of an elastic body mainly composed of rubber compositions. Rubber compositions of the core tire 1 are not specially defined, and materials used for an ordinary solid tire can be selected conveniently. Particularly, a rubber composition having JIS A hardness of 80 to 90 is preferable so as to secure load capacity. Moreover, steel rings or steel cords extending in the circumferential direction of the tire may be embedded in the core tire 1, and reinforcement fibers composed of short fiber or long fiber may be blended in the rubber composition.

On the other hand, the cover tire 11 is similarly made of an elastic body mainly composed of rubber compositions. The rubber compositions of the cover tire 11 are not specially defined, and materials used for an ordinary solid tire can be selected conveniently. Particularly, a rubber composition having JIS A hardness of 60 to 75 and the modulus of 7 to 14 MPa when elongated by 300% at 25 °C is preferable for imparting a sufficient tightening force to the cover tire 11, and for satisfying the required tire characteristics such as abrasive resistance at the same time.

The cover tire 11 comprises a tread part 13 covering the core tire 1 from the outer periphery and side parts 14 for covering the core tire 1 from both right and left sides. A plurality of lug grooves 15 extending in the axial direction of the tire are formed in the tread part 13 of the cover tire 11. In the present embodiment, lug grooves are provided in the tread part of the cover tire as to form a lug pattern; however, grooves in the circumferential direction may be provided in the tread part as to form a rib pattern, or grooves in the circumferential direction and lug grooves may be provided in the tread part as to form a rib and lug pattern. Also, steel cords may be embedded in the tread part 13 of the cover tire 11, and reinforcement fibers composed of short fiber or long fiber may be blended in the rubber composition.

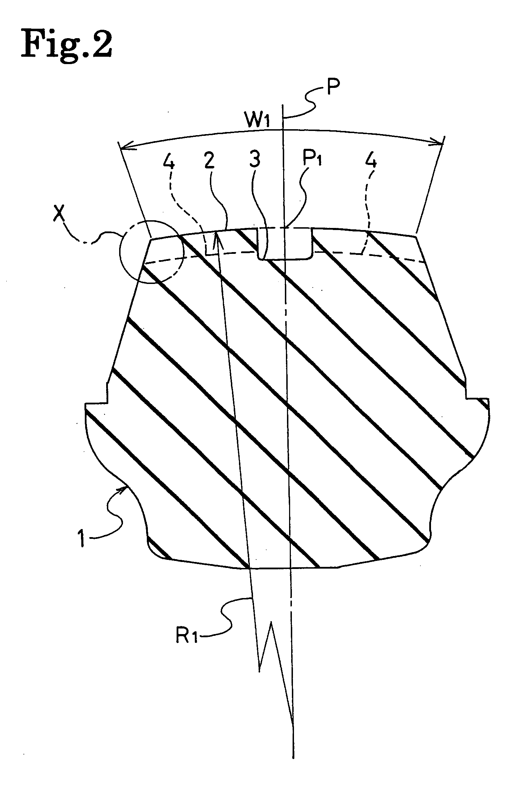

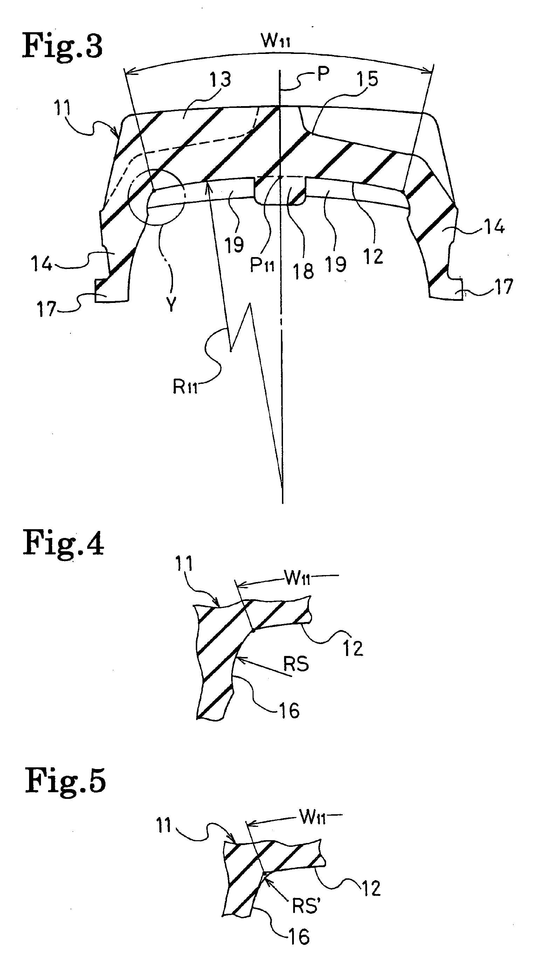

Fig. 2 shows the core tire of the aforementioned compound solid tire, while Fig. 3 shows the cover tire of the aforementioned compound solid tire. In the aforementioned compound solid tire, dimensions and shapes of the core tire 1 and the cover tire 11 are defined as follows. In Fig. 2 and Fig. 3, the inner peripheral length at the center position $P_{11}$ of the inner peripheral surface 12 of the cover tire 11 is set to 92 to 99.5%, preferably 92 to 99%, and more preferably 92 to 98% of the outer peripheral length at the center position $P_1$ of the outer peripheral surface 2 of the core tire 1. Here, the center position $P_1$ of the outer peripheral surface 2 of the core tire 1 is a position where the arc or virtual arc of the curvature radius $R_1$ in the axial direction of the tire on which the outer peripheral surface 2 is drawn crosses the tire equatorial plane P and the center position $P_{11}$ of the inner peripheral surface 12 of the cover tire 11 is a position where the arc or virtual arc of the curvature radius $R_{11}$ in the axial direction of the tire on which the inner peripheral surface 12 is drawn crosses the tire equatorial plane P. The tightening force by the cover tire 11 can be increased, by making the inner peripheral length at the center position $P_{11}$ of the inner peripheral surface 12 of the cover tire 11 shorter than the outer peripheral length at the center position $P_1$ of the outer peripheral surface 2 of the core tire 1 as mentioned above. However, if the inner peripheral length at the center position $P_{11}$ of the inner peripheral surface 12 of the cover tire 11 is too short, it becomes difficult to assemble the core tire 1 and the cover tire 11.

On the other hand, the expanded width $W_{11}$ of the inner peripheral surface 12 of the cover tire 11 is set to 95 to 100%, more preferably 95 to 99% of the expanded width $W_1$ of the outer peripheral surface 2 of the core tire 1. The tightening force by the cover tire 11 can be increased, by making the expanded width $W_{11}$ of the inner peripheral surface 12 of the cover tire 11 shorter than the expanded width $W_1$ of the outer peripheral surface 2 of the core tire 1 as mentioned above. However, if the expanded width $W_{11}$ of the inner peripheral surface 12 of the cover tire 11 is too short, it becomes difficult to assemble the core tire 1 and the cover tire 11.

Moreover, the tire axial curvature radius $R_{11}$ of the inner peripheral surface 12 of the cover tire 11 is set to 60 to 75% of the tire axial curvature radius $R_1$ of the outer peripheral surface 2 of the core tire 1. The tightening force by the cover tire 11 can be increased, by making the curvature radius $R_{11}$ of the inner peripheral surface 12 of the cover tire 11 shorter than the curvature radius $R_1$ of the outer peripheral surface 2 of the core tire 1 in this manner. However, if the curvature radius $R_{11}$ of the inner peripheral surface 12 of the cover tire 11 is too short, it becomes difficult to assemble the core tire 1 and the cover tire 11. It is preferable that the curvature radius $R_{11}$ meets the aforementioned relation with respect to the curvature radius $R_1$; however, it is sufficient if it is equal to or lower than 100% of the curvature radius $R_1$.

It should be appreciated that the core tire 1 may well have a square shoulder as shown by X part in Fig. 2, while the cover tire 11 may well have a round shoulder as shown by Y part in Fig. 3. In other words, the internal surface 16 connecting to the inner peripheral surface 12 of the cover tire 11 is preferably composed of a curved surface of the curvature radius RS as shown in Fig. 4. The stability of the core tire 1 and the cover tire 11 increased by selecting such shoulder shapes. Also, the inner peripheral surface 12 of the cover tire 11 and the internal surface 16 may be connected by the curved surface of the curvature radius RS' as shown in Fig. 5. In this case, the shoulder edge constituting the standard of the expanded width $W_{11}$ shall be decided by the intersection point of the extension line of the inner peripheral surface 12 and the extension line of the internal surface 16 as illustrated.

The tightening force of the core tire 1 by the cover tire 11 can be increased, and these core tire 1 and cover tire 11 are prevented from deviating in the circumferential direction of the tire and the axial direction of the tire, by fitting dimensions and shape of the cover tire 11 with respect to the core tire 1 as mentioned above. Particularly, as a tension is generated in the side part 14 of the cover tire 11, the side part 14 of the cover tire 11 is effectively prevented from opening when turned in the non-driving state, and the cover tire 11 is effectively prevented from coming off the core tire 1.

In the aforementioned compound solid tire, a flange 17 that is thicker than adjacent parts of the core tire 11 is formed on the inner peripheral edge of the side part 14 of the cover tire 11. Such flange 17 controls expansion of the side part 14, and any deviation between the core tire 1 and the cover tire 11, opening of the side part 14 of the cover tire 11 and dislocation of the cover tire 11 can be prevented more securely.

Here, as shown in Fig. 1, supposing the section height of an assembly of the core tire 1 and the cover tire 11 be A, the section height of the cover tire 11 be B, the tread thickness at the center position of the inner peripheral surface of the cover tire 11 be C, the tread thickness at the shoulder position of the cover tire 11 be D and the flange thickness of the cover tire 11 be E, it is preferable that the proportion (%) of these dimensions satisfies the following expressions (1) to (4). It should be appreciated that the tread thickness C is a tread thickness from the center position P11 of the inner peripheral surface of the cover tire 11 to the center position of the tread surface. Besides, the tread thickness D is a tread thickness from the shoulder edge of the core tire 1 to the shoulder edge of the cover tire 11.

$$35 \leqq B/A \times 100 \leqq 70 \quad (1)$$

$$5 \leqq C/A \times 100 \leqq 30 \quad (2)$$

$$100 \leqq D/C \times 100 \leqq 120 \quad (3)$$

$$30 \leqq E/C \times 100 \leqq 60 \quad (4)$$

When the aforementioned dimensional proportions are satisfied, any deviation between the core tire 1 and the cover tire 11, opening of the side part of the cover tire 11 and dislocation of the cover tire 11 can be prevented more securely, for the compound solid tire with two-layered structure of core tire 1 and cover tire 11.

Here, if the proportion of the section height B with respect to the section height A is lower than 35%, the core tire 1 and the cover tire 11 deviate easily, and on the contrary, if it exceeds 70%, the tire assembly operation becomes difficult. If the proportion of the tread thickness C with respect to the section height A is lower than 5%, the core tire 1 and the cover tire 11 deviate easily due to the deformation of the cover tire 11, and on the contrary, if it exceeds 30%, the tire assembly operation becomes difficult. If the proportion of the tread thickness D with respect to the tread thickness C is lower than 100% or more than 120%, the core tire 1 and the cover tire 11 deviate easily. If the proportion of the flange thickness E with respect to the tread thickness C is lower than 30%, the core tire 1 and the cover tire 11 deviate easily, and on the contrary, if it exceeds 60%, the assembly operation becomes difficult. Though it is preferable that the tread thickness C and the flange thickness E satisfy the aforementioned relation, it is sufficient enough if $25 \leqq E/C \times 100 \leqq 100$.

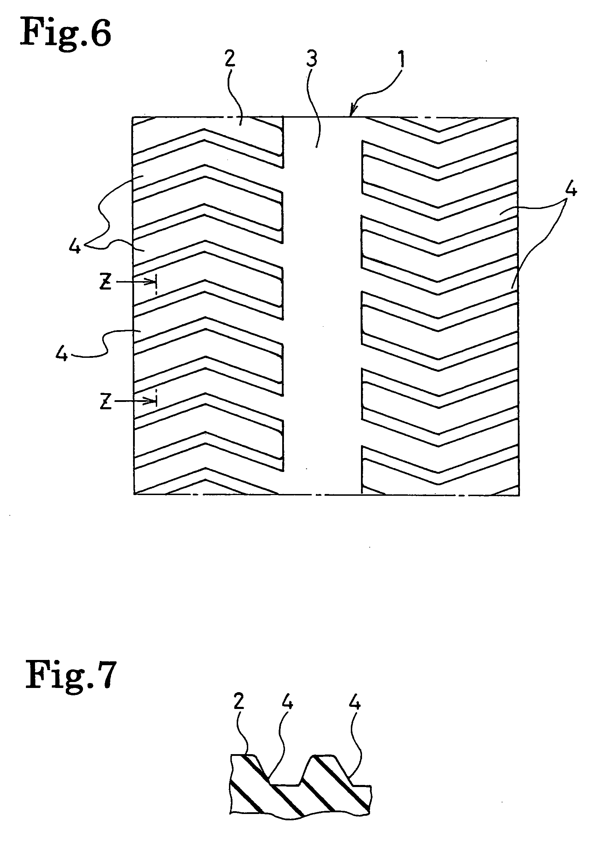

In the aforementioned compound solid tire, as shown in Fig. 6, at least one longitudinal groove 3 extending in the circumferential direction of the tire and a plurality of transverse grooves 4 extending in the axial direction of the tire are formed on the outer peripheral surface 2 of the core tire 1. The side walls of these transverse grooves 4 are slant in the taper shape as shown in Fig. 7. On the other hand, protrusions 18, 19 engaging with the longitudinal groove 3 and transverse grooves 4 are formed in the inner peripheral surface 12 of the cover tire 11. The protrusion 18 extending in the circumferential direction of the tire is destined to prevent deviation mainly in the axial direction of the tire. The protrusion 19 extending in the axial direction of the tire is destined to prevent deviation mainly in the circumferential direction of the tire.

The transverse grooves 4 are slant with respect to the axial direction of the tire by curving as illustrated or the like. Therefore, the protrusion 19 engaging with the transverse groove 4 not only prevents deviation in the circumferential direction of the tire but also comes to have a role to prevent deviation in the axial direction of the tire. When the transverse grooves 4 are slant with respect to the axial direction of the tire, if the pattern by the longitudinal groove 3 and the transverse grooves 4 are directional, the mounting direction might be mistaken when the core tire 1 and the cover tire 11 are assembled. There, an erroneous fitting during the tire assembly can be avoided securely, by differentiating the inclination direction of the transverse grooves 4 on both side parts of the tire equatorial plane P as illustrated, in other words, by forming a non-directional pattern, by making the groove pattern point-symmetrical around an arbitrary axis included in the tire equatorial plane P and extending in the tire radial direction.

Though, in the embodiment mentioned above, protrusions 18, 19 adhere to the grooves 3, 4, a gap may exist between these grooves 3, 4 and protrusions 18, 19. For example, riding comfort can be improved by increasing the flexibility of the core tire 1, if the depth of the longitudinal groove 3 is larger than the height of the protrusion 18. Similarly, notches or grooves extending in the circumferential direction of the tire may be added to the outer peripheral surface 2 of the core tire 1, in order to improve the riding comfort. Also, the protrusion 18 extending in the circumferential direction of the tire may be eliminated, and the protrusion 19 may exist continuously in the axial direction of the tire.

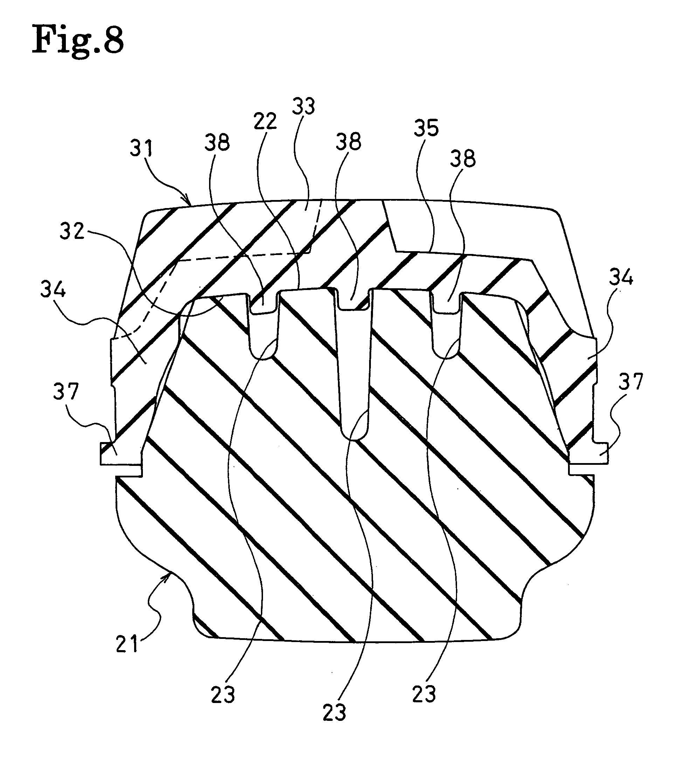

Fig. 8 shows a compound solid tire according to another embodiment of the present invention. This compound solid tire is composed of an annular core tire 21 and an annular cover tire 31, as shown in Fig. 8. The cover tire 31 is layered on the core tire 21 in a non-bonding state, fitting the inner peripheral surface 32 thereof to the outer peripheral surface 22 of the core tire 21. Dimensions of the core tire 21 and cover tire 31 are set similarly to the core tire 1 and the cover tire 11 as mentioned above.

In the aforementioned compound solid tire, the cover tire 31 comprises a tread part 33 covering the core tire 21 from the outer periphery side and side parts 34 for covering the core tire 21 from both right and left sides, and a plurality of lug grooves 35 extending in the axial direction of the tire are formed in the tread part 33, while a flange 37 is formed in the inner peripheral edge of the side part 34.

Besides, in the aforementioned compound solid tire, three (3) longitudinal grooves 23 extending in the circumferential direction of the tire are formed in the outer peripheral surface 22 of the core tire 21. On the other hand, a protrusion 38 engaging with the longitudinal groove 23 is formed in the inner peripheral surface 32 of the cover tire 31. The depth of these longitudinal grooves 23 is set larger than the height of the protrusion 38.

In the aforementioned compound solid tire also, the tightening force of the core tire 21 by the cover tire 31 is increased, by fitting dimensions and shape of the cover tire 31 with respect to the core tire 21, these core tire 21 and cover tire 31 are prevented from deviating in the circumferential direction of the tire and the axial direction of the tire, and the side part 34 is effectively prevented from opening.

[Example]

As a tire for heavy cargo transportation vehicle, a compound solid tire (example 1) with a tire structure shown in Fig. 1 and dimensions shown in Table 1, and a compound solid tire (example 2) with a tire structure shown in Fig. 8 and dimensions shown in Table 1 were manufactured. For the purpose of comparison, compound solid tires (comparative example 1 to 3) with the tire structure shown in Fig. 8 and different dimensions shown in Table 1 were manufactured respectively.

The inner peripheral length of the cover tire is shown by the proportion (%) to the outer peripheral length of the core tire, in Table 1. The expanded width of the inner peripheral surface of the cover tire is shown by the proportion (%) to the expanded width of the outer peripheral surface of the core tire. The curvature radius of the inner peripheral surface of the cover tire is shown by the proportion (%) to the curvature radius of the outer peripheral surface of the core tire.

Moreover, the Table 1 also shows the proportion (%) of the section height B with respect to the section height A, the proportion (%) of the tread thickness C with respect to the section height A, the proportion (%) of the tread thickness D with respect to the tread thickness C, and the proportion (%) of the flange thickness E with respect to the tread thickness C.

Assembling workability, deviation in the circumferential direction of the tire, opening of the side part, and deviation in the axial direction of the tire of the aforementioned five kinds of compound solid tire were evaluated by using the following evaluation methods and results thereof are also shown in Table 1.

Assembling workability:

For each compound solid tire, the core tire and the cover tire were superposed one on the other coaxially, the core tire was pressed in the cover tire using a press machine, and the pressure was measured at that time. As evaluation result, the pressure (MPa) during the press-insertion is shown as it is. Smaller is this pressure, better is the assembling workability.

Deviation in the circumferential direction of the tire:

Each compound solid tire was mounted on the front wheel (corresponding to 7.00 - 12) of a fork lift capable of loading the maximum weight of 2.5 tons, a sudden braking was applied from a driving state of 15km/h with 2 tons load, and deviation degree in the circumferential direction of the tire between the core tire and the cover was measured. As evaluation result, the deviation degree (mm) is shown as it is.

Opening of the side part:

Each compound solid tire was mounted on the front wheel (corresponding to 7.00 - 12) of a fork lift capable of loading the maximum weight of 2.5 tons, a turning motion was executed from the non-driving state with 2 tons load, and the occurrence condition of side part opening was confirmed by visual observation. As evaluation result, absence of the opening is shown by "◎", slight occurrence of the opening by "○", eminent occurrence of the opening by "Δ" and drive impossibility due to the opening by "X".

Deviation in the axial direction of the tire:

Each compound solid tire was mounted on the front wheel (corresponding to 7.00 - 12) of a fork lift capable of loading the maximum weight of 2.5 tons, it was served for work inside premises with 2 tons load, and deviation in the axial direction of the tire between the core tire and the cover was confirmed by visual observation. As evaluation result, absence of the deviation in the axial direction is shown by "◎", slight occurrence of the deviation in the axial direction by "○", eminent occurrence of the deviation in the axial direction by "Δ" and drive impossibility due to the deviation in the axial direction by "X".

Table 1

| | Example 1 | Example 2 | Comparative Example 1 | Comparative Example 2 | Comparative Example 3 |
|---|---|---|---|---|---|
| Tire structure | Fig. 1 | Fig. 8 | Fig. 8 | Fig. 8 | Fig. 8 |
| Inner peripheral length of cover tire (%) | 97 | 97 | 100 | 100 | 91 |
| Expanded width of inner peripheral surface of cover tire (%) | 98 | 98 | 98 | 102 | 98 |
| Curvature radius of cover tire inner peripheral surface of cover tire (%) | 67 | 67 | 67 | 80 | 67 |
| B/A×100(%) | 58 | 58 | 60 | 60 | 58 |
| C/A×100(%) | 19 | 19 | 21 | 21 | 19 |
| D/C×100(%) | 108 | 108 | 111 | 111 | 108 |
| E/C×100(%) | 46 | 46 | 44 | 44 | 46 |
| Assembling workability (Pressure: MPa) | 60 | 60 | 50 | 48 | 80 |
| Deviation in circumferential direction of tire (mm) | 0 | 10 | 100 | 150 | 10 |
| Opening of side part (visual observation) | ◎ | ◎ | × | × | ◎ |
| Deviation in axial direction of tire (visual observation) | ◎ | ◎ | △ | × | ◎ |

As shown in this Table 1, compound solid tires of Examples 1 and 2 present a good assembling workability, and inconvenience such as deviation between the core tire and the cover tire or opening of the side part were barely seen.

The preferred embodiments of the present invention are described in detail; however, it should be understood that various modifications, replacements, and deviations may be made therein, as long as such modifications, replacements, and deviations fall within the true spirit and the scope of the present invention covered by the appended claims.

Industrial Applicability

The compound solid tire according to the present invention comprises a core tire made of an annular elastic body and an annular cover tire with its inner peripheral surface to be fitted to an outer peripheral surface of said core tire, the cover tire comprising a tread part and side parts, and enables to prevent the core tire and cover tire from deviating and the side part of the cover tire from opening, by fitting dimensions and shape of the cover tire to the core tire. As a result, it becomes possible to use a compound solid tire with a two-layered structure of core tire and cover tire without problem until the wear life of the cover tire, and to promote the generalization of compound solid tires excellent in economy.

## Claims

1. A compound solid tire, comprising a core tire made of an annular elastic body and an annular cover tire having an inner peripheral surface to be fitted to an outer peripheral surface of the core tire, the cover tire forming a tread part and side parts, wherein the inner peripheral length of the cover tire at the inner peripheral surface center position is set to 92 to 99.5% of the outer peripheral length of the core tire at the outer peripheral surface center position.

2. The compound solid tire of claim 1, wherein the expanded width of the inner peripheral surface of the cover tire is set to 95 to 100% of that of the outer peripheral surface of the core tire.

3. The compound solid tire of claim 1, wherein the curvature radius in the tire axial direction of the inner peripheral surface of the cover tire is set to 60 to 75% of the curvature radius in the tire axial direction of the outer peripheral surface of the core tire.

4. The compound solid tire of any of claims 1 to 3, wherein a flange is disposed on the inner peripheral edge of the side part of the cover tire.

5. The compound solid tire of claim 4, wherein, assuming that the section height of an assembly of the core tire and the cover tire is A, the section height of the cover tire B, the tread thickness at the inner peripheral surface center position of the cover tire C, the tread thickness at the shoulder position of the cover tire D and the flange thickness of the cover tire E, it is required that the proportion (%) of these dimensions satisfy the following expressions (1) to (4):

$$35 \leqq B/A \times 100 \leqq 70 \quad (1)$$

$$5 \leqq C/A \times 100 \leqq 30 \quad (2)$$

$$100 \leqq D/C \times 100 \leqq 120 \quad (3)$$

$$30 \leqq E/C \times 100 \leqq 60 \quad (4)$$

6. The compound solid tire of any of claims 1 to 5, wherein JIS A hardness of rubber compositions which form the cover tire is 60 to 75, and the modulus at 300% elongation is 7 to 14 MPa.

7. The compound solid tire of any of claims 1 to 6 wherein at least one longitudinal groove extending in the tire circumferential direction and a plurality of transversal grooves extending in the tire axial direction are provided on the outer peripheral surface of the core tire and, on the other hand, a protrusion engaging with the longitudinal groove and transversal grooves is provided on the inner peripheral surface of the cover tire.

**8.** The compound solid tire of claim 7, wherein the transversal grooves are inclined in respect with the tire axial direction and a pattern formed by the longitudinal and transversal grooves is made non-directional.

**Amended claims under Art. 19.1 PCT 1.**

**1.** (Amended) A compound solid tire, comprising a core tire made of an annular elastic body and an annular cover tire having an inner peripheral surface to be fitted to an outer peripheral surface of the core tire, the cover tire forming a tread part and side parts, wherein the inner peripheral length of the cover tire at the inner peripheral surface center position is set to 92 to 99.5% of the outer peripheral length of the core tire at the outer peripheral surface center position, and at least one longitudinal groove extending in the tire circumferential direction and a plurality of transversal grooves extending in the tire axial direction are provided on the outer peripheral surface of the core tire, on the other hand, a protrusion engaging with the longitudinal groove and transversal grooves is provided on the inner peripheral surface of the cover tire.

**2.** The compound solid tire of claim 1, wherein the expanded width of the inner peripheral surface of the cover tire is set to 95% to 100% of that of the outer peripheral surface of the core tire.

**3.** The compound solid tire of claim 1, wherein the curvature radius in the tire axial direction of the inner peripheral surface of the cover tire is set to 60% to 75% of the curvature radius in the tire axial direction of the outer peripheral surface of the core tire.

**4.** The compound solid tire of any of claims 1 to 3, wherein a flange is disposed on the inner peripheral edge of the side part of the cover tire.

**5.** The compound solid tire of claim 4, wherein, assuming that the section height of an assembly of the core tire and the cover tire is A, the section height of the cover tire B, the tread thickness at the inner peripheral surface center position of the cover tire C, the tread thickness at the shoulder position of the cover tire D and the flange thickness of the cover tire E, it is required that the proportion (%) of these dimensions satisfy the following expressions (1) to (4):

$$35 \leqq B/A \times 100 \leqq 70 \quad (1)$$

$$5 \leqq C/A \times 100 \leqq 30 \quad (2)$$

$$100 \leqq D/C \times 100 \leqq 120 \quad (3)$$

$$30 \leqq E/C \times 100 \leqq 60 \quad (4)$$

**6.** The compound solid tire of any of claim 1 to 5, wherein JIS A hardness of rubber compositions which form the cover tire is 60 to 75, and the modulus at 300% elongation is 7 to 14 MPa.

**7.** (Deleted)

**8.** (Amended) The compound solid tire of claim 1, wherein the transversal groove is inclined in respect with the tire axial direction and a pattern formed by the longitudinal and transversal grooves is made non-directional, by making the pattern point-symmetrical around an arbitrary axis included in the tire equatorial plane and extending in the tire radial direction.

Fig.1

P
11
13
2
P11
15
C
D
B
12
14
14
17
A
17
E
1

# Fig.2

P
W1
4
2
3
P1
4
X
1
R1

Fig.3
W11
13
P
15
11
14
19
P11
18
19
12
14
17
Y
17
R11

Fig.4

11
W11
12
RS
16

Fig.5

11
W11
12
RS'
16

Fig.6

2
3
1
4
4
4
4
Z
Z

Fig.7

2
4
4

# Fig.8

31
38
22
33
38
35
38
32
34
34
37
37
21
23
23
23
23

## INTERNATIONAL SEARCH REPORT

International application No. PCT/JP03/05680

A. CLASSIFICATION OF SUBJECT MATTER
Int.Cl7 B60C7/00, B60C11/00, B60C11/02

According to International Patent Classification (IPC) or to both national classification and IPC

B. FIELDS SEARCHED

Minimum documentation searched (classification system followed by classification symbols)
Int.Cl7 B60C7/00, B60C11/00, B60C11/02

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | US 3815651 A (TRED-X CORP.), 11 June, 1974 (11.06.74), Column 2, line 63 to column 3, line 5; Fig. 4 & JP 49-63103 A & DE 2335808 A & FR 2192907 A | 1-8 |
| Y | US 5277727 A (BANDAG LICENSING CORP.), 11 January, 1994 (11.01.94), Column 3, lines 9 to 20; table A; Figs. 1, 2 & JP 4-314607 A & EP 492048 A2 | 1-8 |
| Y | US 5837072 A (FUKUNAGA ENGINEERING CO., LTD.), 17 November, 1998 (17.11.98), Abstract & JP 3245619 B & WO 98/7586 A1 & EP 1016554 A1 | 1-8 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search 25 July, 2003 (25.07.03) | Date of mailing of the international search report 05 August, 2003 (05.08.03) |
| Name and mailing address of the ISA/ Japanese Patent Office | Authorized officer |
| Facsimile No. | Telephone No. |

Form PCT/ISA/210 (second sheet) (July 1998)

## INTERNATIONAL SEARCH REPORT

International application No.
PCT/JP03/05680

C (Continuation). DOCUMENTS CONSIDERED TO BE RELEVANT

| Category* | Citation of document, with indication, where appropriate, of the relevant passages | Relevant to claim No. |
|---|---|---|
| Y | JP 5-154941 A (Bridgestone Corp.), 22 June, 1993 (22.06.93), Claim 4; Fig. 1 (Family: none) | 3 |
| Y | JP 10-315347 A (Ryokichi WATANABE), 02 December, 1998 (02.12.98), Claims; Fig. 6 (Family: none) | 4 |
| Y | JP 61-229602 A (The Ohtsu Tire & Rubber Co., Ltd.), 13 October, 1986 (13.10.86), Table 2 (Family: none) | 6 |
| Y | JP 10-86609 A (Takeshi IKETANI), 07 April, 1998 (07.04.98), Claim 2; Fig. 2 (Family: none) | 7 |
| Y | JP 7-232508 A (Sumitomo Rubber Industries, Ltd.), 05 September, 1995 (05.09.95), Fig. 2 (Family: none) | 8 |

Form PCT/ISA/210 (continuation of second sheet) (July 1998)